# DEMANDE DE BREVET EUROPEEN

(11) **EP 1 683 960 A2**
(43) Date de publication de la demande: **26.07.2006**
(21) Numéro de dépôt: 05292737.3
(22) Date de dépôt: 19.12.2005
(51) Int. Cl.: F02M 37/22

(54) **Système de filtration à gazole**

(30) Priorité: 20.12.2004 FR 0413587
(71) Demandeur: FILTRAUTO, 78286 Guyancourt Cedex (FR)
(72) Inventeur: Ben Amor, Noureddin, 91860 Epinay sous Senart (FR)
(74) Mandataire: Vougny, Christophe

(57) **Abrégé**

L'invention concerne un système de filtration à gazole pour moteur diesel, comportant un boîtier étanche (12) qui comprend un élément filtrant (16), un passage d'entrée (18) destiné à relié à un réservoir de gazole, une chambre en amont de l'élément filtrant (16), un passage de sortie (20) de gazole filtré, en aval de l'élément filtrant (16). Le système de filtration comporte en outre un passage (22) dans lequel un élément coulissant (26) est monté mobile entre une première position lorsque la différence de pression de gazole entre l'amont et l'aval de l'élément filtrant est représentatif d'un état non colmaté dudit élément filtrant, et une deuxième position lorsque la différence de pression du gazole entre l'amont et l'aval de l'élément filtrant est représentative d'un état colmaté dudit élément filtrant (16).

## Description

La présente invention se rapporte aux systèmes de filtration à gazole pour moteur diesel.

Plus particulièrement, l'invention concerne un système de filtration à gazole pour moteur diesel, comportant un boîtier étanche qui comprend lui-même un élément filtrant. Le boîtier comporte en outre un passage d'entrée destiné à être relié à un réservoir de gazole, le passage d'entrée communiquant avec une chambre de gazole qui est située à l'intérieur du boîtier en amont de l'élément filtrant, un passage de sortie de gazole filtré, qui est situé en aval de l'élément filtrant et qui est destiné à être raccordé à une pompe d'injection haute pression.

Dans les systèmes de filtration de l'art antérieur du type décrit précédemment, l'élément filtrant est susceptible d'être colmaté au bout d'un certain temps d'utilisation, ou lorsqu'une température extérieure basse tend à paraffiner le gazole en le rendant plus visqueux, ce qui est également susceptible de colmater l'élément filtrant. Ce colmatage de l'élément filtrant empêche alors l'écoulement du gazole liquide à travers celui-ci, et par conséquent le débit d'alimentation de la pompe à injection est diminué en entraînant des risques de désamorçage du système de filtration. Le colmatage de l'élément filtrant diminue donc les performances du véhicule car la rampe à injection ne reçoit plus suffisamment de gazole pour alimenter les injecteurs.

La présente invention propose une solution permettant de détecter et/ou de remédier le colmatage de l'élément filtrant, de façon simple, directe et précise.

A cet effet, selon l'invention, un système de filtration à gazole du genre en question est caractérisé en ce que le système de filtration comporte en outre un passage dans lequel est logé un élément coulissant présentant une première extrémité destinée à être en contact avec le gazole situé en amont de l'élément filtrant et une deuxième extrémité destinée à être en contact avec le gazole situé en aval de l'élément filtrant, et en ce que l'élément coulissant est monté mobile à l'intérieur du passage entre, d'une part, une première position lorsque la différence de pression de gazole entre l'amont et l'aval de l'élément filtrant est représentative d'un état non colmaté dudit élément filtrant, et d'autre part, une deuxième position lorsque la différence de pression du gazole entre l'amont et l'aval de l'élément filtrant est représentative d'un état colmaté dudit élément filtrant.

La différence de pression entre la zone aval et la zone amont de l'élément filtrant étant représentative d'un état de colmatage de l'élément filtrant, le système de filtration décrit ci-dessus permet d'obtenir, de façon simple, une indication directe, rapide et fiable de cet état, et ainsi d'actionner divers moyens pour limiter le colmatage.

Dans divers modes de réalisation du système de filtration à gazole selon l'invention, on peut éventuellement avoir recours en outre à l'une et/ou à l'autre des dispositions suivantes :
- le passage est disposé à l'intérieur du boîtier
- des moyens de sollicitation élastique sont adaptés pour solliciter l'élément coulissant vers sa première position lorsque la différence de pression de gazole entre l'amont et l'aval de l'élément filtrant est représentative d'un état non colmaté dudit élément filtrant ;
- le système de filtration comprend un moyen d'indication pour indiquer la position dans laquelle se trouve l'élément coulissant ;
- le moyen d'indication est formé d'un témoin visuel disposé sur l'élément coulissant et d'une zone transparente réalisée dans le boîtier ;
- le moyen d'indication est un relais à lames souples, comprenant un élément magnétique disposé sur l'élément coulissant et des éléments de contact disposés adjacents à l'élément magnétique à l'extérieur du boîtier ;
- le passage comporte en outre des première, deuxième et troisième ouvertures et l'élément coulissant est formé par un tiroir de régulation adapté pour former, avec le passage, une vanne de distribution ;
- la première ouverture est adaptée pour recevoir du gazole en excès provenant de la pompe à injection haute pression et/ou de la rampe à injection et/ou des injecteurs, la deuxième ouverture est adaptée pour être reliée au réservoir de gazole, et la troisième ouverture est adaptée pour diriger le gazole en excès en amont de l'élément filtrant sans séjourner dans le réservoir ;
- l'élément coulissant formant le tiroir de distribution, est adapté, lorsqu'il est dans sa première position représentative d'un état non colmaté de l'élément filtrant, pour mettre en communication étanche les première et deuxième ouvertures de sorte que le gazole en excès provenant de la pompe à injection haute pression et/ou de la rampe à injection, et/ou des injecteurs, est dirigé vers le réservoir ;
- l'élément coulissant formant le tiroir de distribution est adapté, lorsqu'il est dans sa deuxième position représentative d'un état colmaté de l'élément filtrant, pour mettre en communication étanche les première et troisième ouvertures de sorte que le gazole en excès provenant de la pompe à injection haute pression et/ou de la rampe à injection et/ou des injecteurs est dirigé vers la chambre d'arrivée en amont de l'élément filtrant ;
- l'élément coulissant et l'élément filtrant présentent des axes de symétrie confondus ;
- le système de filtration comprend en outre un moyen de chauffage du gazole dans la chambre d'arrivée, dont l'activation dépend de la position de l'élément coulissant et/ou de la mesure d'un capteur de température disposé dans la chambre d'arrivée.
- le système de filtration comporte en outre un passage dans lequel est logé un élément coulissant présentant une première extrémité destinée à être en contact avec la pression atmosphérique et une deuxième extrémité destinée à être en contact avec le gazole situé en aval de l'élément filtrant, et en ce que l'élément coulissant est monté mobile à l'intérieur du passage entre, d'une part, une première position lorsque la différence de pression de gazole entre la pression atmosphérique et la pression en aval de l'élément filtrant est représentative d'un état non colmaté dudit élément filtrant, et d'autre part, une deuxième position lorsque la différence de pression du gazole entre la pression atmosphérique et la pression en aval de l'élément filtrant est représentative d'un état colmaté dudit élément filtrant.
- la première extrémité est en contact avec une chambre à pression atmosphérique, délimitée par une membrane souple.

D'autres caractéristiques et avantages de l'invention apparaîtront au cours de la description suivante de plusieurs de ses modes de réalisation, donné à titre d'exemples non limitatifs, en regard des dessins joints.

Sur les dessins :
- la figure 1 représente une vue en coupe du système de filtration selon un premier mode de réalisation de l'invention,
- la figure 2 représente une vue similaire à la figure 1 du système de filtration selon une première variante de réalisation,
- la figure 3 représente une vue similaire à la figure 1 du système de filtration selon une seconde variante de réalisation,
- la figure 4 représente une vue en coupe du système de filtration selon un deuxième mode de réalisation,
- la figure 5 représente une vue en coupe du système de filtration selon un troisième mode de réalisation.

Sur les différentes figures, les mêmes références désignent des éléments identiques ou similaires.

Le système de filtration 10 selon l'invention est un système de filtration 10 à gazole pour véhicules à moteur diesel.

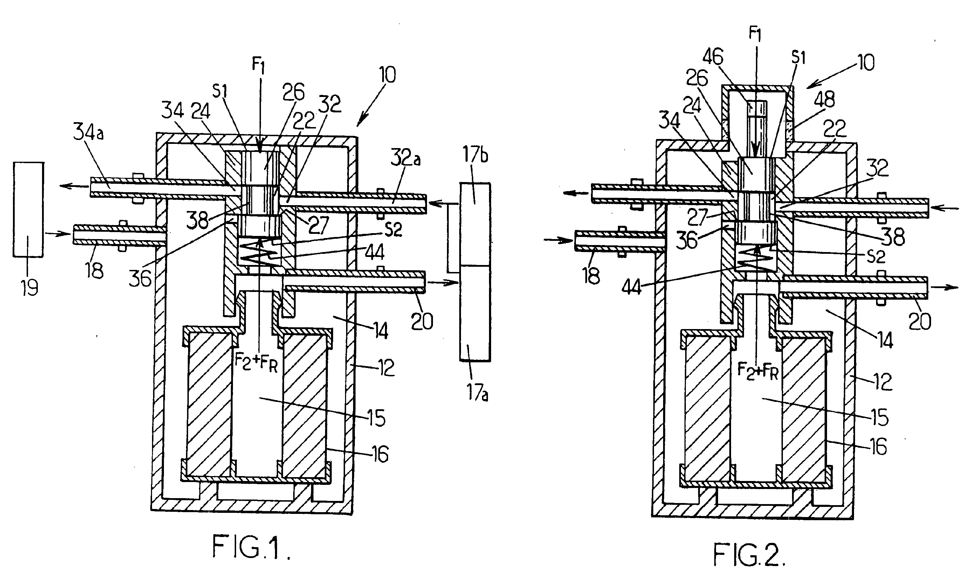

Dans un premier mode de réalisation représenté à la figure 1, le système de filtration 10 comporte un boîtier 12 définissant une chambre étanche à l'intérieur de laquelle circule du gazole. Le gazole présente une viscosité et une température limite de filtrabilité qui sont choisies en fonction de l'environnement climatique dans lequel circule le véhicule.

Le système de filtration 10 comprend en outre un élément filtrant 16, disposé à l'intérieur du boîtier 12 et destiné à filtrer le gazole avant qu'il ne soit envoyé vers la pompe à injection 17a, puis vers la rampe à injection du moteur 17b et aux injecteurs (non représentés). L'élément filtrant 16 délimite avec le boîtier 12 une chambre amont 14 dans laquelle le gazole n'a pas encore été filtré et une chambre aval 15 dans laquelle le gazole a été filtré.

Le boîtier 12 comporte en outre des conduits destinés à faire communiquer entre eux différents éléments disposés autour ou dans le système de filtration 10.

Pour cela un premier conduit d'entrée 18 est destiné à recevoir du gazole à filtrer acheminé par l'intermédiaire d'un circuit d'entrée relié à un réservoir de gazole 19, le premier conduit d'entrée 18 communiquant avec la chambre en amont 14 de l'élément filtrant 16.

Un deuxième conduit de sortie 20 est situé en aval de l'élément filtrant 16 et qui est destiné à être raccordé à une pompe à injection haute pression 17a.

L'invention comporte en outre un passage 22 délimité par une paroi 24, dans lequel un élément coulissant 26 se déplace, de manière étanche. Tel que représenté à la figure 1, le passage 22 se trouve à l'intérieur du boîtier 12 de manière telle que l'élément coulissant 26 présente une première extrémité supérieure S1 en contact avec le gazole en amont de l'élément filtrant 16 et une deuxième extrémité inférieure S2 en contact avec le gazole en aval de l'élément filtrant 16.

Selon une première variante de l'invention le passage 22 peut être disposé à l'extérieur du boîtier 12, chacune des extrémités de celui-ci étant respectivement reliée à la chambre amont 14 et à la chambre aval 15.

Selon le premier mode de réalisation représenté sur la figure 1, le passage 22 forme une vanne de recirculation et comporte trois ouvertures 32, 34, 36 à travers la paroi 24 qui débouchent d'un côté dans le passage 22 et débouchent, de l'autre côté, respectivement dans des troisième et quatrième conduits 32a, 34a et dans la chambre amont 14. Le troisième conduit 32a est relié à la pompe à injection 17a et à la rampe d'injection 17b et aux injecteurs. Le conduit 34a est relié au réservoir 19. L'élément coulissant 26 se présente sous la forme d'un tiroir de régulation qui permet d'obturer soit l'ouverture 34 du quatrième conduit, soit l'ouverture 36 de la chambre amont 14 et ainsi de faire communiquer alternativement le troisième conduit 32a avec le conduit 34a ou la chambre amont 14. Le tiroir de régulation 26 présente un évidement 38, en forme de rainure annulaire, pour l'écoulement du gazole depuis le troisième conduit 32a vers le quatrième conduit 34a ou la chambre amont 14.

Sur la figure 1, le tiroir de régulation et l'élément filtrant 16 présentent des axes de symétrie confondus, mais ils peuvent aussi être perpendiculaires. De manières alternatives, toutes les configurations entre les deux éléments sont possibles.

Le tiroir de régulation 26 est actionné pour orienter le gazole en excès de la pompe à injection haute pression et de la rampe d'injection 17b et des injecteurs soit, dans une première position, vers la deuxième ouverture 34, soit, dans une deuxième position vers la troisième ouverture 36.

De manière alternative, il est possible que le gazole en excès provienne de la pompe à injection 17a, ou de la pompe à injection 17a et de la rampe d'injection 17b, ou de la pompe à injection 17a et des injecteurs, ou de la rampe d'injection 17b, ou des injecteurs, ou de la rampe d'injection 17b et des injecteurs. Ces variantes peuvent s'appliquer aux différents modes de réalisation de l'invention décrite ci-dessous qui sera décrite pour le cas où le gazole provient de la pompe à injection 17a et de la rampe d'injection 17b et des injecteurs.

Lorsque le moteur tourne, la face S1 formant l'extrémité supérieure du tiroir de régulation 26 est disposée en regard de la chambre amont 14 et est soumise à la pression P1 du gazole qui circule dans la chambre amont 14. La pression P1 peut être toujours la même pour un état de colmatage du filtre donné lorsqu'une pompe basse pression (dite de gavage) est disposée en amont du filtre (la pompe haute pression, c'est-à-dire la pompe à injection étant en aval du filtre). Le filtre est alors dit en pression.

Par ailleurs le tiroir de régulation 26 présente une deuxième face S2 formant l'extrémité inférieure, de section sensiblement identique à l'extrémité supérieure, sur laquelle le gazole filtré exerce une pression P2.

Les deux extrémités S1, S2 sont soumises à deux pressions différentes. L'extrémité supérieure S1 est soumise à la pression P1 du gazole dans la chambre amont 14 de l'élément filtrant 16, cette pression étant égale à la pression de gavage moins la perte de pression due aux pertes de charge du gazole en mouvement dans le circuit d'alimentation en amont du filtre, P1= Pgavage-ΔPligne

L'extrémité inférieure S2 est soumise à la pression P2 du gazole dans la chambre aval 15 de l'élément filtrant 16, qui est égale à la différence entre la pression P1 et la perte de pression ΔP_{EF} due au passage du gazole à travers l'élément filtrant 16, P2 = Pgavage-ΔPligne-ΔP_{EF}.

La perte de pression ΔP_{EF} est variable, notamment en fonction de la température du gazole.

La vanne de recirculation peut être actionnée sans tenir compte des variations de pression atmosphérique car la pression de gavage délivrée par la pompe basse pression est généralement constante pour un état de colmatage du filtre donné (à la différence de la pression atmosphérique qui peut varier). Par conséquent les sections S1, S2 peuvent être réalisées de manière à ce que S1 soit sensiblement égale à S2, et le tiroir de régulation 26 est alors actionné uniquement en fonction d'une valeur seuil de pertes de charge à travers l'élément filtrant : ΔP_{EF} seuil. Dans cette configuration comprenant une pompe de gavage en amont du filtre, la valeur seuil de ΔP_{EF} sera toujours identique (par exemple environ 360 mbar) même si Patm varie. La valeur seuil de ΔP_{EF} est déterminée pour que la pompe à injection haute pression 17a et les injecteurs reçoivent toujours de manière régulière du gazole.

Par ailleurs, la face inférieure S2 du tiroir de régulation 26 est soumise à la force de rappel Fr d'un ressort 44, permettant de maintenir le tiroir de régulation dans la première position en butée axiale contre un épaulement 27 lorsque L'élément filtrant n'est pas colmaté et donc lorsque la perte de pression ΔP_{EF} due au passage du gazole au travers de l'élément filtrant est inférieure à ΔP_{EF} seuil.

De plus, lorsque le tiroir de régulation n'est plus en butée sur l'épaulement 27, il existe au moins une position d'équilibre du tiroir, pour lesquelles P1xS1 = P2xs2+Fr.

Le ressort peut facilement être choisi lorsque le filtre est placé entre une pompe basse pression et une pompe haute pression puisque dans ces conditions la pression dans le circuit d'alimentation de gazole aussi bien en aval qu'en amont de l'élément filtrant est indépendante de la pression atmosphérique, dans ces conditions et comme précédemment expliqué les dimensions de la face S1 peuvent être sensiblement égales aux dimensions de la face S2, d'où S1=S2=S et par conséquent P1=P2+Fr/S pour une position d'équilibre du tiroir.

On détermine ΔP_{EF} seuil pour lequel et au-delà duquel on considère que l'élément filtrant est colmaté, c'est-à-dire que les pertes de charge dues au passage du gazole à travers l'élément filtrant 16 sont trop importantes, et les injecteurs ne sont plus alimentés ou difficilement. Le tiroir de régulation 26 doit être actionné pour faire recirculer le gazole excédentaire venant de la pompe haute pression 17a et de la rampe d'injection 17b, et des injecteurs, directement vers la chambre amont 14.

Les faces S1 et S2 du tiroir de régulation 26 sont déterminées en fonction de la géométrie du filtre, des débits de gazole et de l'encombrement disponible dans le filtre.

Connaissant ΔP_{EF} seuil, il est possible de déterminer la force Fg qui permet de déplacer le tiroir de régulation 26 et qui est générée par le différentiel de pression ΔP_{EF} = ΔP_{EF} seuil. En effet si les dimensions de la face S1 sont égales aux dimensions de la face S2 on a : Fg = S*ΔP_{EF} seuil avec S=S1=S2.

Connaissant Fg et sachant que le tiroir doit être actionné lorsque Fg dépasse Fr, il est possible de calculer la raideur k du ressort car Fg=Fr=k* (Lo-L). La longueur libre Lo du ressort est fonction de la course souhaitée pour le tiroir de régulation 26 et de l'encombrement disponible, L étant la longueur du ressort tel que comprimé dans le système.

L'invention fonctionne comme suit.

Le but de la vanne de recirculation, disposée dans le système de filtration 10 selon l'invention, est de permettre par sélection du circuit d'écoulement du gazole un réchauffement plus rapide du gazole de la ligne d'alimentation diesel du véhicule lorsque le véhicule ou plus exactement le moteur est mis en marche après un temps d'arrêt relativement long dans des conditions de températures basses entraînant un paraffinage de gazole. Le réchauffement du gazole permet d'éliminer les particules de paraffine qui se créent pendant l'arrêt du moteur et dans des conditions de températures basses, et par conséquent permet d'éviter le colmatage de l'élément filtrant 16.

Pour cela le tiroir de régulation 26 évolue entre les première et deuxième positions de manière à permettre l'écoulement du gazole dans deux circuits différents.

Lorsque le véhicule passe à l'arrêt, le tiroir de régulation 26 est dans sa première position. En effet, lorsque le moteur vient d'être arrêté, l'élément filtrant 16 n'est pas colmaté (ΔP_{EF} seuil non atteinte) soit parce que les conditions de température et les caractéristiques du gazole sont telles que ΔP_{EF} seuil n'a pas été atteinte lors du fonctionnement du moteur ou soit par ce que ΔP_{EF} seuil a été atteinte mais le gazole en amont de l'élément filtrant 16 a été réchauffé par recirculation depuis la pompe haute pression 17a, la rampe d'injection 17b et les injecteurs du gazole en excès. Le tiroir de régulation 26, dans sa première position telle que représentée à la figure 1 est en butée contre l'épaulement 27 et met en communication le conduit 32a et le conduit 34a.

Si avant le démarrage, le véhicule est dans un environnement dont la température est moyenne ou élevée et comprend un gazole présentant des caractéristiques telles qu'il ne paraffine pas à cette température, l'élément filtrant 16 ne se colmatera pas au démarrage du véhicule (la perte de pression ΔP_{EF} due au passage du gazole au travers de l'élément filtrant 16 restera inférieure à ΔP_{EF} seuil) : au démarrage du moteur le tiroir de régulation 26 reste dans sa première position. Ainsi lorsque le véhicule est démarré, le gazole en aval de l'élément filtrant 16 est pompé par la pompe à injection 17a, puis transmis à la rampe d'injection 17b et aux injecteurs, et l'excès de gazole est refoulé par l'intermédiaire du troisième conduit 32a, du passage 22 et du quatrième conduit 34a vers le réservoir 19. Le gazole en excès est refoulé directement depuis la pompe à injection 17 et de la rampe d'injection 17b, ou de la pompe à injection 17a et des injecteurs vers le réservoir 19.

La face supérieure S1 du tiroir de régulation 26, qui est en contact avec le gazole de la chambre en amont 14 de l'élément filtrant 16, est soumis à la pression P1. On admettra qu'une force globale F1=P1xS1 s'exerce sur cette face supérieure S1. La face inférieure S2 est, quant à elle, soumise à la pression P2 du gazole situé dans la chambre en aval 15 de l'élément filtrant 16. On admettra qu'une force globale F2 = P2xS2 s'exerce sur ladite face inférieure S2. De plus le ressort 44 en compression sollicite donc cette dernière selon une force Fr ayant la même direction que F2. En considérant la formule P1*S1=P2*S2+Fr, on obtient F1=F2+Fr : pour une position d'équilibre la force exercée par la pression en amont est sensiblement identique à la force exercée par la pression en aval additionnée à la force du ressort de compression 44

Dans la première position, la force F1 est inférieure à la somme de la force F2 et de la force Fr exercée par le ressort 44 : F1≤ F2+Fr, soit P1*S1≤P2*S2+Fr. Le tiroir 26 est par conséquent en butée contre l'épaulement 27.

Si avant le démarrage, le véhicule est dans un environnement à basse température et comporte un gazole qui paraffine à cette température, dite température limite de filtrabilité, alors l'élément filtrant 16 se colmatera lors du démarrage du véhicule. Lorsque la température atteint la température limite de filtrabilité du gazole, le gazole ne passe plus ou difficilement à travers l'élément filtrant 16. Ainsi après le démarrage du véhicule, la pompe à injection 17a pompe le gazole en aval de l'élément filtrant 16 plus rapidement que le débit d'écoulement du gazole à travers l'élément filtrant 16. Cela crée une différence de pression ΔP_{EF} entre le gazole en amont et le gazole en aval de l'élément filtrant 16 qui est supérieure à ΔP_{EF} seuil. Par exemple, la pression amont P1 augmente dans la chambre amont 14 alors que la pression P2 reste sensiblement stable dans la chambre aval 15, lorsqu'une pompe de gavage est disposée en amont.

La différence de pression ΔP_{EF}>ΔP_{EF} seuil va entraîner le déplacement du tiroir de régulation 26 vers sa deuxième position grâce à une force Fg=F1-F2 qui est supérieure à Fr et qui résulte de l'augmentation des pertes de charge du gazole à travers l'élément filtrant et lorsque Fg≥Fr. Ce déplacement est dirigé vers la partie aval de l'élément filtrant 16, le circuit du troisième conduit 32a vers l'ouverture 36 est alors ouvert.

Dans cette position, le fluide excédentaire s'écoule directement de la pompe à injection 17a et de la rampe d'injection 17b et des injecteurs vers la chambre en amont 14 de l'élément filtrant 16, sans passer par le réservoir 19. Le gazole réchauffé par la pompe à injection 17a va réchauffer progressivement le gazole situé dans la chambre en amont 14 de l'élément filtrant 16. La viscosité du gazole diminue, et le gazole paraffiné devient progressivement plus liquide. Le gazole s'écoule mieux à travers l'élément filtrant 16 et par conséquent la différence de pression ΔP_{FF} entre P1 et P2 diminue.

Lorsque ΔP_{EF} passe en dessous de ΔP_{EF} seuil, le tiroir de régulation 26 est déplacé progressivement vers sa première position, dans laquelle le gazole en excès peut circuler directement depuis la pompe à injection 17a, et de la rampe d'injection 17b, ou de la pompe à injection 17a et des injecteurs vers le réservoir 19, lorsque le véhicule est en marche.

Ces dispositions permettent de réaliser la fonction de réchauffage de façon économique, par fonctionnement mécanique, sans élément thermosensible actionnant un réchauffeur électrique. Ces dispositions permettent aussi une plus grande sécurité qu'avec les dispositifs électriques de l'art antérieur avec lesquels il existe des risques d'étincelles au contact du gazole. De plus les différents éléments selon l'invention étant seulement des pièces mécaniques, il n'y a pas de problème d'étanchéité que l'on peut rencontrer avec des éléments électroniques.

Selon une deuxième variante de l'invention, représentée à la figure 2, le système de filtration comporte en outre un moyen indicateur que l'élément filtrant 16 est colmaté.

Pour cela un témoin visuel 46 est disposé sur l'élément coulissant 26, disposé en regard d'une zone transparente 48 réalisée dans le boîtier 10, de manière à ce que l'utilisateur puisse voir le témoin lumineux 46 lorsque le tiroir de distribution 26 est dans sa deuxième position représentative d'un état colmaté de l'élément filtrant 16, lors de la mise en marche du véhicule. La zone transparente 48 peut comporter un repère pour indiquer le niveau de colmatage de l'élément filtrant 16.

Le fonctionnement de cette variante de l'invention est identique à celle décrite pour le premier mode de réalisation. Mais dans cette variante de réalisation, le déplacement du tiroir de régulation 16 entraîne le déplacement du moyen visuel, offrant à l'utilisateur la possibilité de déduire, par la position du moyen visuel, l'état de colmatage de l'élément filtrant 16.

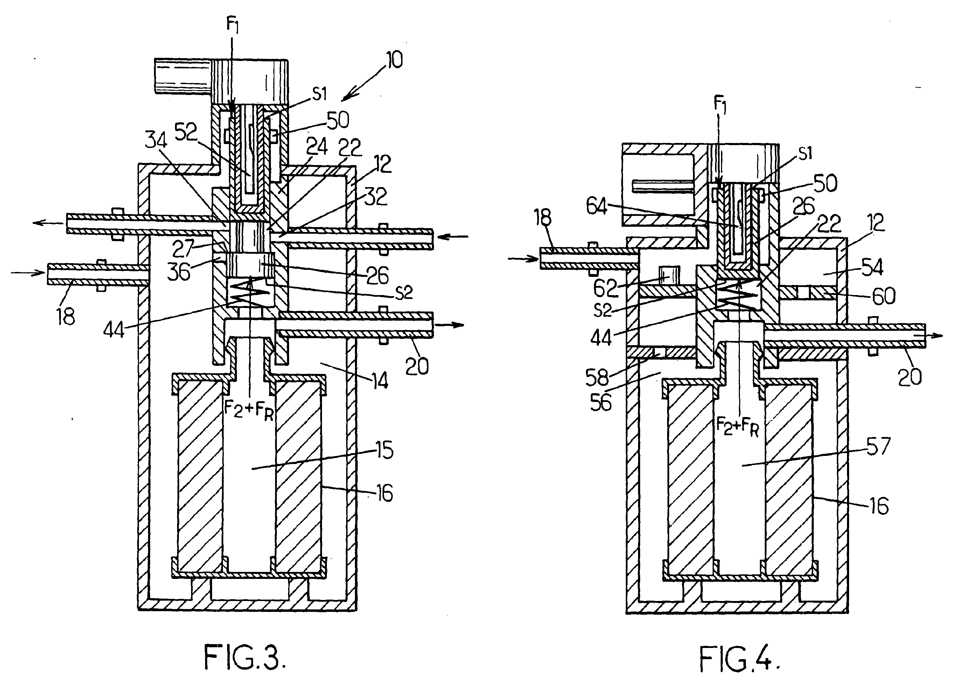

Selon une troisième variante de réalisation, représenté à la figure 3, le système de filtration 10 comporte un moyen électrique indiquant la position du tiroir de distribution. Ce moyen est constitué d'une bague aimantée 50, solidaire du tiroir de régulation 26. Le tiroir 26 présente dans sa partie supérieure et adjacente aux parois du boîtier, un logement étanche dans lequel est disposé un relais à lames souples 52, ou relais « reed ». Le tiroir 26 se déplace tel que décrit dans la première variante de l'invention, la pression du gazole situé dans la chambre amont 14 s'exerçant alors sur l'extrémité supérieure S1 du tiroir 26 qui présente ici une forme sensiblement annulaire. Lors du déplacement du tiroir 26, la bague aimantée 50 vient se positionner dans la zone de commutation du relais 52, ce qui déclenche l'actionnement du moyen visuel, par exemple l'allumage d'une diode ou d'un témoin lumineux disposé sur le tableau de bord du véhicule, soit directement, soit via le calculateur, pour indiquer visuellement à l'utilisateur du véhicule que l'élément filtrant 16 commence à être colmaté, lors du démarrage du véhicule.

De manière alternative, dans le premier mode de réalisation, la pression P1 peut dépendre de la pression atmosphérique, et donc indépendamment de l'état de colmatage du filtre, elle peut varier, lorsque aucune pompe de gavage n'est placée en amont du filtre. Le filtre est alors dit en dépression.

La pression P1 en amont du filtre est alors égale à la pression atmosphérique moins les pertes de charge dans les conduites en amont du filtre P1=Patm-ΔPligne.

La pression P2 en amont du filtre est alors égale à la pression atmosphérique moins les pertes de charge dans les conduits en amont du filtre moins les pertes de charge dues au passage du gazole à travers l'élément filtrant : P2=Patm-ΔPligne-ΔP_{EF}

Dans cette configuration, les pressions dans le circuit d'alimentation et ce jusqu'aux injecteurs varient en fonction de la pression atmosphérique.

Pour éviter les phénomènes de distillation du gazole, et par conséquent les phénomènes de cavitation, il est préférable de maintenir en aval de l'élément filtrant une pression P2 supérieure par exemple d'environ 500 mbar. Autrement dit, dans cet exemple Patm - ΔP_{EF} - ΔPligne doit être supérieur à environ 500 mbar.

La pression atmosphérique pouvant varier, il est donc important que la valeur seuil de ΔP_{EF} permettant d'actionner le tiroir de régulation 26 soit modifié automatiquement en fonction des variations de pressions atmosphérique. Le fait d'avoir deux faces différentes S1 et S2 permet de résoudre ce problème de variation de pression : S1 < S2. Par exemple, S1 égal à environ 50 mm² et S2 égal à environ 255 mm2.

La différence de section de S1 de S2 permet de diminuer la valeur seuil de ΔP_{EF} lorsque la pression atmosphérique diminue, car ΔP_{EF} seuil est dépendante du rapport entre la section S1 et la section S2.

La différence entre les surfaces S1 et S2 permet par exemple au tiroir de régulation 26 de réagir à une ΔP_{EF} seuil d'environ 360 mbar pour une pression atmosphérique d'environ 1000 mbar et à une ΔP_{EF} seuil de 120 mbar pour une pression atmosphérique de 700 mbar, ce qui permet finalement de conserver une pression P2 juste en aval de l'élément filtrant supérieur ou voisine de 500 mbar et ainsi d'éviter les problèmes de distillation du gazole, et permettre ainsi d'éviter des aléas au niveau de l'alimentation de l'injection, et au pire d'éviter un désamorçage complet de la pompe à injection.

En effet, si Patm = 700 mbar et si les pertes de pression ΔPligne sont de l'ordre de 95 mbar, la pression en aval de l'élément filtrant = Patm - ΔP_{EF} - ΔPligne = 700 - 120 - 95 = 485 mbar = pression proche de 500 mbar permettant d'éviter les problèmes de distillation du gazole, pour l'exemple ci-dessous.

Une fois S1 et S2 trouvés il devient possible de déterminer les caractéristiques du ressort : En partant de la formule F1 = (F2 + Fr) à la position d'équilibre du tiroir de régulation avec FI = P1xS1 et F2=P2xS2 connaissant S1, P1, S2, P2, ΔP_{EF} seuil, ΔPligne, il est possible de déduire Fr et ainsi la raideur du ressort.

Dans un deuxième mode de réalisation, représenté à la figure 4, le système de filtration 10 comporte, comme dans le premier mode de réalisation, un élément filtrant 16 contenu dans un boîtier 12 étanche. Le boîtier 12 comprend un premier conduit d'entrée 18 qui est destiné à recevoir du gazole à filtrer acheminé par l'intermédiaire d'un circuit d'entrée relié à un réservoir de gazole, le conduit d'entrée 18 communiquant avec une chambre d'arrivée 54 de gazole qui est située à l'intérieur du boîtier 12 et qui communique avec une chambre en amont 56 de l'élément filtrant 16 par l'intermédiaire d'une ouverture 58. Ainsi la pression et la température du gazole situé dans la chambre d'arrivée 54 et celles du gazole situé dans la chambre amont 56 sont sensiblement identiques.

Le boîtier 12 comporte de plus un deuxième conduit de sortie 20 de gazole filtré, qui est situé dans une chambre aval 57 de l'élément filtrant 16 et qui est destiné à être raccordé à une pompe à injection haute pression 17a.

Dans ce deuxième mode de réalisation, le système de filtration 10 comporte aussi un moyen de chauffage 60 du gazole, disposé dans la chambre d'arrivée 54 . Ce moyen peut être une résistance de chauffage telle qu'une plaque chauffante, alimentée électriquement.

Le système de filtration comprend aussi un capteur de température 62 disposé dans la chambre d'arrivée 54, permettant de mesurer directement la température du gazole située dans la chambre d'arrivée 54, c'est à dire la température du gazole en amont de l'élément filtrant 16.

Le système de filtration comporte de plus un relais 64, identique à celui décrit précédemment en référence à la figure 3, qui va déclencher le moyen de chauffage 60 électrique, en fonction de la différence de pression entre la pression amont et la pression aval de l'élément filtrant. En effet la différence de pression actionne le déplacement de l'élément coulissant 26 vers sa deuxième position comme décrit précédemment, et la bague aimantée 50 vient se positionner dans la zone de commutation du relais, qui déclenche l'actionnement du moyen de chauffage 60.

L'activation du moyen de chauffage 60 est déclenchée lorsque les deux conditions suivantes sont remplies :
- le capteur 62 a mesuré la température du gazole comme égale à une température seuil Tseuil
- et la différence de pression ΔP_{EF} a atteint la valeur ΔP_{EF} seuil, grâce à laquelle l'élément coulissant 26 se déplace, tel que décrit dans le premier mode de réalisation, et entraîne la commutation du relais ce qui signifie que l'élément filtrant 16 est dans un état colmaté.

Ainsi différents paramètres peuvent être pris en compte pour l'activation du moyen de chauffage 60.

On considérera par la suite que Tseuil est égale à la température limite de filtrabilité TLF du gazole.

Différents cas peuvent se présenter pour l'activation du moyen de chauffage.

On considère que Tseuil est égale à la température de limite de filtration d'un gazole « été », c'est à dire une température de limite de filtration assez élevée.

Selon un premier cas, si le gazole utilisé est du gazole « été », le moyen de chauffage sera activé lorsque le capteur de température mesurera la valeur Tseuil déterminée, et lorsque la différence de pression au passage de l'élément filtrant atteindra la valeur ΔP_{EF} seuil déterminée. La température limite de filtrage étant directement liée à la différence de pression en amont et en aval de l'élément filtrant, les deux capteurs mesureront chacun la valeur seuil, sensiblement au même moment, ce qui permettra d'activer le moyen de chauffage électrique 60.

Selon un deuxième cas, lorsque le gazole utilisé est du gazole « hiver » présentant une température de limite de filtrabilité plus basse, le capteur de température atteindra la température Tseuil prédéterminée qui est celle du gazole « été » bien avant que la valeur ΔPseuil de pression ne soit atteinte. Ainsi le gazole ne sera pas réchauffé inutilement, car la deuxième condition n'est pas remplie à savoir l'élément coulissant 26 n'est pas dans sa deuxième position représentative d'un état colmaté de l'élément filtrant 16.

Selon un troisième cas, lorsque la température du gazole est supérieure à la valeur Tseuil, mais que la différence de pression a atteint la valeur de pression ΔP_{EF} seuil, cela indique que l'élément filtrant 16 reste colmaté, malgré le réchauffage du gazole lors du démarrage du véhicule. Cette information indique à l'utilisateur que la cartouche filtrante est colmatée par des particules solides, autres que des particules de paraffine et qu'elle doit être par conséquent changée.

Les trois variantes ou alternatives de réalisation décrites dans le premier mode de réalisation peuvent s'appliquer de la même manière, dans le second mode de réalisation.

Selon un troisième mode de réalisation de l'invention, la surface S1 du tiroir de régulation est soumise uniquement à la pression atmosphérique, car elle est disposée en regard d'une chambre 66 délimitée par une membrane souple 68.

La surface S1 du tiroir de régulation 26 est soumise à la pression atmosphérique P1 et la surface S2 est soumise à la pression P2 qui est égale à la pression atmosphérique moins la perte de pression ΔPligne due aux pertes de charges du gazole en mouvement dans le circuit d'alimentation en amont de l'élément filtrant 16 et moins la perte de pression ΔP_{EF} due au passage du gazole au travers de l'élément filtrant 16.
P1=Patm et P2=Patm - ΔPligne - ΔP_{EF},
D' où P2=P1- ΔPligne - ΔP_{EF}.
La force Fg pouvant déplacer le tiroir de régulation 26 à l'encontre de la force Fr exercée par le ressort 44 est par conséquent générée par la perte de pression ΔPligne et la perte de pression ΔP_{EF}.

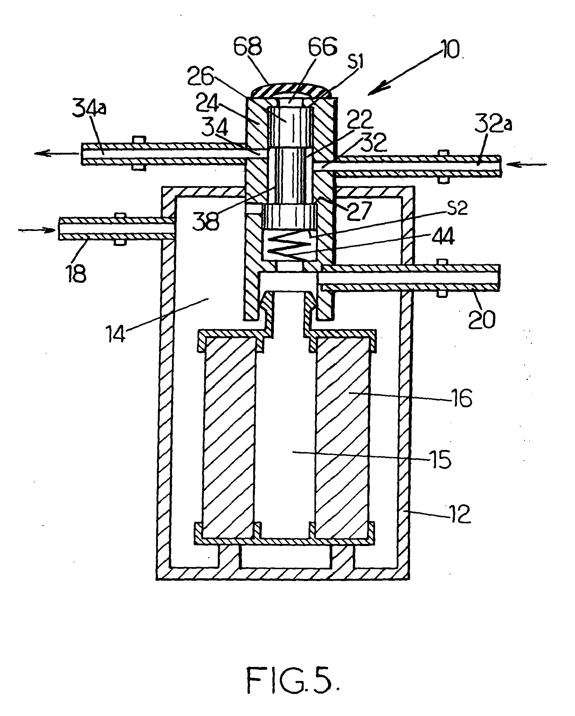

Dans le troisième mode de réalisation représenté à la figure 5, le système de filtration 10 comporte, comme dans les modes de réalisation précédents, un boîtier 12 définissant une chambre étanche à l'intérieur de laquelle circule du gazole. Il comprend en outre un élément filtrant 16, disposé à l'intérieur du boîtier 12 et destiné à filtrer le gazole avant qu'il ne soit envoyé vers la pompe à injection 17a, puis vers la rampe à injection du moteur 17b et vers les injecteurs. L'élément filtrant 16 délimite avec le boîtier 12 une chambre amont 14 dans laquelle le gazole n'a pas encore été filtré et une chambre aval 15 dans laquelle le gazole a été filtré.

Le boîtier 12 comporte en outre des conduits destinés à faire communiquer entre eux différents éléments disposés autour ou dans le système de filtration 10.

Pour cela un premier conduit d'entrée 18 est destiné à recevoir du gazole à filtrer acheminé par l'intermédiaire d'un circuit d'entrée relié à un réservoir de gazole 19, le premier conduit d'entrée 18 communiquant avec la chambre en amont 14 de l'élément filtrant 16.

Un deuxième conduit de sortie 20 est situé en aval de l'élément filtrant 16 et qui est destiné à être raccordé à une pompe à injection haute pression 17a.

L'invention comporte en outre un passage 22 délimité par une paroi 24, dans lequel un élément coulissant 26 se déplace, de manière étanche. Tel que représenté à la figure 1, le passage 22 se trouve partiellement à l'intérieur du boîtier 12 de manière telle que l'élément coulissant 26 présente une première extrémité supérieure S1 en contact avec la pression atmosphérique de la chambre 66 et une deuxième extrémité inférieure S2 en contact avec le gazole en aval de l'élément filtrant 16.

Le passage 22 forme une vanne de recirculation et comporte trois ouvertures 32, 34, 36 qui débouchent d'un côté dans le passage 22 et qui débouchent de l'autre côté respectivement dans des troisième et quatrième conduits 32a, 34a et dans la chambre amont 14. Le troisième conduit 32a est relié à la pompe à injection 17a et à la rampe d'injection 17b et aux injecteurs. Le conduit 34a est relié au réservoir 19. L'élément coulissant 26 se présente sous la forme d'un tiroir de régulation qui permet d'obturer soit l'ouverture 34 du quatrième conduit, soit l'ouverture 36 de la chambre amont 14 et ainsi de faire communiquer alternativement le troisième conduit 32a avec le conduit 34a ou la chambre amont 14. Le tiroir de régulation 26 présente un évidement 38, en forme de rainure annulaire, pour l'écoulement du gazole depuis le troisième conduit 32a vers le quatrième conduit 34a ou la chambre amont 14.

Le tiroir de régulation 26 est actionné lorsque les pertes de charge à travers l'élément filtrant sont trop importantes et ne garantissent pas une bonne alimentation en gazole des injecteurs pour orienter le gazole en excès de la pompe d'injection 17a et de la rampe d'injection 17b, ou de la pompe à injection 17a et des injecteurs soit, dans une première position, vers la deuxième ouverture 34, soit, dans une deuxième position, vers la troisième ouverture 36.

Lorsque le moteur est en marche, la face S1 formant l'extrémité supérieure du tiroir de régulation 26 est disposée en regard de la chambre 66 et est soumise à la pression P1, c'est à dire à la pression atmosphérique.

Les dimensions des faces S1 et S2 sont déterminées de manière à tenir compte de la variation de la pression atmosphérique et à obtenir une pression P2 supérieure ou égale à, par exemple, 500mbars, afin d'éviter les phénomènes de distillation et ainsi le désamorçage de la pompe à injection tel que décrit dans le premier mode de réalisation.

Par ailleurs, la face inférieure S2 du tiroir de régulation 26 est soumise à la force de rappel d'un ressort 44, permettant de maintenir le tiroir de régulation dans la première position, en butée contre l'épaulement 27, lorsque les surfaces S1 et S2 sont soumises aux pressions P1 et P2, en condition de fonctionnement normal du filtre lorsque celui-ci n'est pas considéré comme colmaté.

Le filtre conformément au troisième mode de réalisation fonctionne sensiblement de la même manière que le filtre selon le premier mode de réalisation décrit précédemment en référence à la figure 1. De plus, pour ce mode de réalisation P1=Patm, et la perte de pression dû au gazole en mouvement dans le circuit d'alimentation en amont de l'élément filtrant n'a aucune influence sur P1.

De même, les deuxième et troisième variantes de réalisation décrites précédemment, c'est à dire le témoin visuel et le moyen indicateur électrique, peuvent s'appliquer de la même manière que décrit précédemment en référence aux figures 2 et 3, dans le troisième mode de réalisation.

## Revendications

1. Système de filtration à gazole pour moteur diesel, comportant un boîtier étanche (12) qui comprend lui-même :
- un élément filtrant (16),
- un passage d'entrée (18) destiné à être relié à un réservoir de gazole, le passage d'entrée (18) communiquant avec une chambre de gazole qui est située à l'intérieur du boîtier (12) en amont de l'élément filtrant (16),
- un passage de sortie (20) de gazole filtré, qui est situé en aval de l'élément filtrant (16) et qui est destiné à être raccordé à une pompe à injection haute pression (17a),
**caractérisé en ce que** le système de filtration comporte en outre un passage (22) dans lequel est logé un élément coulissant (26) présentant une première extrémité (S1) destinée à être en contact avec le gazole situé en amont de l'élément filtrant (16) et une deuxième extrémité (S2) destinée à être en contact avec le gazole situé en aval de l'élément filtrant (16), et **en ce que** l'élément coulissant (26) est monté mobile à l'intérieur du passage (22) entre, d'une part, une première position lorsque la différence de pression de gazole entre l'amont et l'aval de l'élément filtrant est représentative d'un état non colmaté dudit élément filtrant, et d'autre part, une deuxième position lorsque la différence de pression du gazole entre l'amont et l'aval de l'élément filtrant est représentative d'un état colmaté dudit élément filtrant (16).

2. Système de filtration selon la revendication 1, dans lequel le passage (22) est disposé à l'intérieur du boîtier (12) .

3. Système de filtration selon l'une des revendications 1 et 2, dans lequel des moyens de sollicitation élastique (44) sont adaptés pour solliciter l'élément coulissant (26) vers sa première position lorsque la différence de pression de gazole entre l'amont et l'aval de l'élément filtrant est représentative d'un état non colmaté dudit élément filtrant (16).

4. Système de filtration selon l'une des revendications précédentes, comprenant un moyen d'indication (46 ; 52) pour indiquer la position dans laquelle se trouve l'élément coulissant(26).

5. Système de filtration selon la revendication 4, dans lequel le moyen d'indication (46) est formé d'un témoin visuel (46) disposé sur l'élément coulissant (26) et d'une zone transparente (48) réalisée dans le boîtier (12).

6. Système de filtration selon la revendication 4, dans lequel le moyen d'indication est un relais (52) à lames souples, comprenant un élément magnétique (50) disposé sur l'élément coulissant (26) et des éléments de contact disposés adjacents à l'élément magnétique (50) à l'extérieur du boîtier (12).

7. Système de filtration selon l'une des revendications 1 à 6, dans lequel le passage (22) comporte en outre des première, deuxième et troisième ouvertures (32, 34, 36) et l'élément coulissant (26) est formé par un tiroir de régulation adapté pour former, avec le passage (22), une vanne de distribution.

8. Système de filtration selon la revendication 7, dans lequel :
- la première ouverture (32) est adaptée pour recevoir du gazole en excès provenant de la pompe à injection haute pression (17a) et/ou de la rampe à injection et/ou des injecteurs.
- la deuxième ouverture (34) est adaptée pour être reliée au réservoir de gazole,
- et la troisième ouverture (36) est adaptée pour diriger le gazole en excès en amont de l'élément filtrant (16) sans séjourner dans le réservoir (19).

9. Système de filtration selon la revendication 8, dans lequel l'élément coulissant (26) formant le tiroir de distribution, est adapté, lorsqu'il est dans sa première position représentative d'un état non colmaté de l'élément filtrant, pour mettre en communication étanche les première et deuxième ouvertures (32, 34) de sorte que le gazole en excès provenant de la pompe à injection haute pression (17a) et/ou de la rampe d'injection et/ou des injecteurs est dirigé vers le réservoir (19).

10. Système de filtration selon la revendication 8 ou la revendication 9, dans lequel l'élément coulissant (26) formant le tiroir de distribution est adapté, lorsqu'il est dans sa deuxième position représentative d'un état colmaté de l'élément filtrant, pour mettre en communication étanche les première et troisième ouvertures (32, 36) de sorte que le gazole en excès provenant de la pompe à injection haute pression (17a) et/ou de la rampe d'injection (17b) et/ou des injecteurs est dirigé vers la chambre d'arrivée en amont de l'élément filtrant (16).

11. Système de filtration selon l'une des revendications précédentes, dans lequel l'élément coulissant (26) et l'élément filtrant (16) présentent des axes de symétrie confondus.

12. Système de filtration selon l'une des revendications 7 à 11, comprenant en outre un moyen de chauffage (60) du gazole dans la chambre d'arrivée (54), dont l'activation dépend de la position de l'élément de l'élément coulissant (26) et/ou de la mesure d'un capteur de température (62) disposé dans la chambre d'arrivée (54).

13. Système de filtration à gazole pour moteur diesel, comportant un boîtier étanche (12) qui comprend lui-même :
- un élément filtrant (16),
- un passage d'entrée (18) destiné à être relié à un réservoir de gazole, le passage d'entrée (18) communiquant avec une chambre de gazole qui est située à l'intérieur du boîtier (12) en amont de l'élément filtrant (16),
- un passage de sortie (20) de gazole filtré, qui est situé en aval de l'élément filtrant (16) et qui est destiné à être raccordé à une pompe à injection haute pression (17a),
**caractérisé en ce que** le système de filtration comporte en outre un passage (22) dans lequel est logé un élément coulissant (26) présentant une première extrémité (S1) destinée à être en contact avec la pression atmosphérique et une deuxième extrémité (S2) destinée à être en contact avec le gazole situé en aval de l'élément filtrant (16), et **en ce que** l'élément coulissant (26) est monté mobile à l'intérieur du passage (22) entre, d'une part, une première position lorsque la différence de pression de gazole entre la pression atmosphérique et la pression en aval de l'élément filtrant est représentative d'un état non colmaté dudit élément filtrant, et d'autre part, une deuxième position lorsque la différence de pression du gazole entre la pression atmosphérique et la pression en aval de l'élément filtrant est représentative d'un état colmaté dudit élément filtrant (16).

14. Système de filtration à gazole pour moteur diesel selon la revendication 13, dans lequel la première extrémité (S1) est en contact avec une chambre (66) à pression atmosphérique, délimitée par une membrane souple.
